# EUROPÄISCHE PATENTSCHRIFT

(11) **EP 3 411 662 B1**
(45) Veröffentlichungstag und Bekanntmachung des Hinweises auf die Patenterteilung: **11.12.2019**
(21) Anmeldenummer: 17703373.5
(22) Anmeldetag: 01.02.2017
(51) Int. Cl.: G01C 21/26, G01C 21/36, B60Q 3/18, B60Q 3/78

(54) **KRAFTFAHRZEUG**
MOTOR VEHICLE
VÉHICULE AUTOMOBILE

(30) Priorität: 03.02.2016 DE 102016001176
(43) Veröffentlichungstag der Anmeldung: 12.12.2018
(73) Patentinhaber: Audi AG, 85045 Ingolstadt (DE)
(72) Erfinder: BERLITZ, Stephan, 86529 Schrobenhausen (DE); TONTSCH, Friedrich-Uwe, 85051 Ingolstadt (DE); KASTNER, Julia, 92339 Beilngries (DE)
(86) Internationale Anmeldenummer: PCT/EP2017/052153
(87) Internationale Veröffentlichungsnummer: WO 2017/134105

(56) Entgegenhaltungen:
- DE-A1-102012 009 338
- US-A1- 2006 271 261
- US-A1- 2011 084 852

## Beschreibung

Die Erfindung betrifft ein Kraftfahrzeug, umfassend wenigstens ein linienförmiges Leuchtmittel zur direkten und/oder indirekten Beleuchtung eines Fahrzeuginnenraums, das sich zumindest abschnittsweise horizontal entlang wenigstens eines Bauteils des Kraftfahrzeugs erstreckt, und eine Positionserfassungseinheit zur Erfassung einer eine Position und eine Ausrichtung des Kraftfahrzeugs beschreibenden Egoinformation.

Kraftfahrzeuge mit linienförmigen Leuchtmitteln sind bekannt, wobei die Leuchtmittel typischerweise eine Ambiente-Beleuchtung realisieren, die vornehmlich der ästhetischen Aufwertung des Fahrzeuginnenraums und der Hervorhebung von Konturen des wenigstens einen Bauteils im Rahmen eines besonderen Designkonzepts dient.

DE 10 2012 009338 A1 offenbart eine Beleuchtungsvorrichtung im Innenraum eines Fahrzeugs. Die Beleuchtungsvorrichtung umfasst zwei Lichtquellen und einen Lichtleiter. Die Intensität der Lichtemission beider Lichtquellen wird verändert, wodurch ein Bereich mit einem Farbverlauf dargestellt werden kann. Die Veränderung dieses Bereichs kann dazu verwendet werden, die Position eines Hindernisses oder eines anderes Verkehrsteilnehmers zu visualisieren. Das Kraftfahrzeug erfasst die Relativposition eines Orts, auf den eine Warnmeldung bezogen ist.

In jüngerer Zeit hat die Nutzung von sozialen Netzwerken im Internet stark zugenommen. Sofern Personen in einer Freundes- oder Kontaktliste eines Nutzers ein Ortungsmittel, beispielsweise ein Mobiltelefon, bei sich führen, kann deren momentane Position bestimmt und über das soziale Netzwerk anderen Nutzern bereitgestellt werden. Diese können sich so darüber informieren, ob sich in ihrer unmittelbaren Nähe befreundete Personen aufhalten. Ein Fahrer des Kraftfahrzeugs, der sich über die aktuelle Position befreundeter Personen aus dem sozialen Netzwerk informieren will, müsste hierzu seinen Blick vom Verkehrsgeschehen abwenden und auf sein Mobiltelefon sehen. Derartige Ablenkungen sollen im Fahrbetrieb jedoch vermieden werden. Der Erfindung liegt mithin die Aufgabe zugrunde, eine Darstellung befreundeter Personen aus einem sozialen Netzwerk in einem Kraftfahrzeug zu ermöglichen, ohne den Fahrer vom Fahrbetrieb abzulenken.

Diese Aufgabe wird erfindungsgemäß durch ein Kraftfahrzeug der eingangs genannten Art gelöst, wobei das Leuchtmittel horizontal in mehrere Leuchtsegmente unterteilt ist, die jeweils ein fest vorgegebenes Abstrahlprofil aufweisen, wobei das Kraftfahrzeug eine Steuereinrichtung aufweist, die dazu ausgebildet ist,
- aus einer über eine Kommunikationseinrichtung des Kraftfahrzeugs von einem kraftfahrzeugexternen Internetserver abgerufenen Ortsinformation, die eine Position einer Person beschreibt, und der Egoinformation eine eine Richtung, in der sich die Person bezüglich des Kraftfahrzeugs befindet, beschreibende Richtungsinformation zu ermitteln,
- in Abhängigkeit der Richtungsinformation eine wenigstens ein anzusteuerndes Leuchtsegment umfassende Untergruppe der Leuchtsegmente auszuwählen, und
- das jeweilige der Untergruppe zugehörige Leuchtsegment gemäß einer seine Leuchthelligkeit und/oder seine Leuchtfarbe vorgebenden, die Position der Person visualisierenden Konfiguration anzusteuern.

Die Erfindung beruht auf der Überlegung, das linienförmige Leuchtmittel aus mehreren Leuchtsegmenten zu bilden und wenigstens eines dieser Leuchtsegmente derart anzusteuern, dass ein Insasse des Kraftfahrzeugs, insbesondere der Fahrer, einen visuellen Hinweis auf eine insbesondere in einem internetbasierten sozialen Netzwerk verzeichnete, Person erhält. Die Steuereinrichtung ermittelt zunächst eine die Richtung, in der sich die Person bezüglich des Kraftfahrzeugs befindet, beschreibende Richtungsinformation in Abhängigkeit der durch die Egoinformation beschriebenen Position und Ausrichtung des Kraftfahrzeugs und der durch die Ortsinformation beschriebenen Position der Person. Die Richtungsinformation kann beispielsweise als Azimutwinkel, insbesondere bezüglich der Fahrzeuglängsachse, ermittelt werden. Die Ortsinformation kann als Koordinate der Position der Person in einem geodätischen Koordinatensystem vorliegen. Für die Bereitstellung der Ortsinformation ist eine Kommunikationseinrichtung vorgesehen, die die Ortsinformation von einem kraftfahrzeugexternen Internetserver abrufen kann. Die Kommunikationseinrichtung kann beispielsweise selbst eine drahtlose Verbindung zum Internet herstellen oder mit einem tragbaren Datenkommunikationsgerät, wie ein Mobiltelefon, gekoppelt sein, beispielsweise über Bluetooth.

Aus der Richtungsinformation ermittelt die Steuereinrichtung sodann eine Untergruppe von wenigstens einem Leuchtsegment, mit dem die Position, an der sich die Person befindet, visualisierbar ist. Die Untergruppe kann lediglich eines aber auch mehrere der Leuchtsegmente umfassen. Darüber hinaus ist die Steuereinrichtung dazu ausgebildet, dass wenigstens eine Leuchtsegment dieser Untergruppe gemäß einer seine Leuchthelligkeit und/oder Leuchtfarbe vorgebenden Konfiguration anzusteuern. Durch eine Wahl einer für einen Insassen des Kraftfahrzeugs von der Leuchtfarbe und/oder der Konfiguration weiterer Leuchtsegmente unterscheidbaren Konfiguration der Untergruppe wird ein Hinweis auf die Position der Person, also ihre Visualisierung, ermöglicht.

Das linienförmige Leuchtmittel erstreckt sich vorzugsweise im Wesentlichen horizontal, beispielsweise können wenigstens 70 Prozent oder wenigstens 90 Prozent seiner Linienlänge horizontal verlaufen. Der Verlauf des Leuchtmittel kann durch eine geringfügige Krümmung, deren Radius insbesondere größer als die Fahrzeugbreite ist, von der Horizontalen abweichen, um beispielsweise einer Kontur des Bauteils zu folgen. Die einzelnen Leuchtsegmente können jeweils ein Leuchtelement aufweisen oder aus einer Gruppe von gemeinsam gesteuerten Leuchtelementen bestehen. Auch ist es möglich, dass das Kraftfahrzeug mehrere der linienförmigen Leuchtmittel umfasst, die sich horizontal in Umfangsrichtung des Fahrzeuginnenraums zueinander benachbart oder voneinander beabstandet erstrecken. Als Leuchtelement kann beispielsweise eine RGB-LED genutzt werden, für die, insbesondere durch Pulsweitenmodulation, die Leuchtfarbe und/oder die Leuchthelligkeit vorgeben werden kann. Die Steuerung der Leuchthelligkeit und/oder der Leuchtfarbe kann durch eine Steuereinrichtung erfolgen, die dem Leuchtmittel zugeordnet ist, jedoch auch durch eine zentrale Steuereinrichtung, die mehrere Leuchtmittel steuert. Beispielsweise kann die Vorgabe der einzelnen Pulsweiten oder die Vorgabe eines Steuersignals zur Pulsweitenmodulation über einen Fahrzeugbus erfolgen.

Es ist auch denkbar, dass in oder an dem Kraftfahrzeug wenigstens ein Helligkeitssensor zur Erfassung der Umgebungshelligkeit vorgesehen ist, wobei die Helligkeit der Leuchtsegmente zusätzlich in Abhängigkeit der Umgebungshelligkeit steuerbar ist.

Die Steuereinrichtung kann als Navigationseinrichtung im Kraftfahrzeug ausgebildet oder Teil einer solchen sein. Zweckmäßigerweise basiert die Positionserfassungseinheit auf einer satellitengestützten Positionserfassung, beispielsweise GPS oder Galileo. Die Positionserfassungseinheit kann in die Navigationseinrichtung integriert sein.

Durch das erfindungsgemäßen Kraftfahrzeug wird so der Vorteil realisiert, dass das bei herkömmlichen Kraftfahrzeugen lediglich zur Ambiente-Beleuchtung verwendete Leuchtmittel zur zusätzlichen Informationsvermittlung an die Insassen des Kraftfahrzeugs, insbesondere hinsichtlich in sozialen Netzwerken verzeichneter Personen, genutzt werden kann. Dazu wird die Aufteilung des Leuchtmittels in mehrere Leuchtsegmente zu der zuvor beschriebenen Visualisierung der Position der Person genutzt, so dass ein Insasse des Fahrzeugs, insbesondere der Fahrer, diese Information erfassen kann, ohne vom Fahrgeschehen abgelenkt zu werden.

Die Steuereinrichtung kann ferner dazu ausgebildet sein, die Untergruppe derart auszuwählen, dass sie ein Leuchtsegment umfasst, welches sich aus der Sicht wenigstens eines Insassen des Kraftfahrzeugs auf einer Linie mit der Position der Person befindet. Dazu kann die Steuereinrichtung beispielsweise Information über eine Sitzposition des Insassen bei der Auswahl der Untergruppe berücksichtigen, so dass eine perspektivisch korrekte Visualisierung der Position der Person ermöglicht wird. Nachdem aus dem Stand der Technik bereits eine Vielzahl von Möglichkeiten bekannt ist, auch die Blickrichtung und/oder die Kopf- und/oder Augenposition des Insassen zu bestimmen, kann insbesondere vorgesehen sein, solche Informationen bei der Auswahl der Untergruppe zu berücksichtigen. Dazu kann das Kraftfahrzeug insbesondere eine wenigstens einen Insassen erfassende Kamera aufweisen.

Außerdem ist es bei dem erfindungsgemäßen Kraftfahrzeug vorteilhaft, wenn die Steuereinrichtung ferner zum Auswählen der Untergruppe und/oder zum Anpassen der Konfiguration in Abhängigkeit der Ortsinformation und/oder einer eine Eigenschaft der Person beschreibenden Personeninformation ausgebildet ist. Solche Eigenschaften können insbesondere ein Ordnungsmerkmal sein, gemäß dem mehrere im sozialen Netzwerk verzeichnete Person zu virtuellen Gruppen (z.B. enge Freunde, Verwandte, Geschäftspartner) zusammengefasst werden. Die Zugehörigkeit zu einer solchen Gruppe kann beispielsweise durch die Leuchtfarbe der Leuchtelemente der Untergruppe visualisiert werden. Ebenso ist es denkbar, dass die Anzahl von Leuchtelementen der gewählten Untergruppe je nach Eigenschaft der Person größer oder kleiner gewählt wird. Besonders bevorzugt wird die Anzahl der Elemente der Untergruppe in Abhängigkeit einer aus der Ortsinformation und der Egoinformation ermittelten Entfernung der Person zum Kraftfahrzeug ausgewählt. Es können beispielsweise mehreren Intervallen von Entfernungen jeweils eine unterschiedliche Anzahl von Leuchtelementen zugeordnet sein. Dies erlaubt eine besonders einfache Abschätzung der Entfernung der Person zum Fahrer bzw. zum Kraftfahrzeug.

Bei dem erfindungsgemäßen Kraftfahrzeug kann zudem eine akustische und/oder eine zur Anzeige von Texten und/oder Grafiken ausgebildete optische Ausgabeeinrichtung vorgesehen sein, die mittels der Steuereinrichtung zur Ausgabe einer auf die visualisierte Person hinweisenden Hinweisinformation ansteuerbar ist. Die Hinweisinformation kann aus mittels der Kommunikationseinrichtung abgerufenen Daten des sozialen Netzwerks abgeleitet werden. Insbesondere kann ein Name der Person angezeigt oder akustisch ausgegeben werden. Ebenso kann die Hinweisinformation die Entfernung der Person zum Kraftfahrzeug beschreiben.

Die Hinweisinformation kann zusätzlich eine durch die Kommunikationseinrichtung bereitgestellte drahtlose Kontaktmöglichkeit zur Person beschreiben, wobei die Steuereinrichtung ferner dazu ausgebildet sein kann, bei Vorliegen einer eine Herstellung einer Kommunikationsverbindung über die Kontaktmöglichkeit anfordernden Bedieneingabe des Insassen die Kommunikationseinrichtung zur Herstellung der Kommunikationsverbindung anzusteuern. Die drahtlose Kontaktmöglichkeit kann beispielsweise eine Mobilfunkrufnummer der Person sein, wobei dem Insassen so die Möglichkeit gegeben wird, die visualisierte Person anzurufen. Dazu kann die Kommunikationseinrichtung selbst einen solchen Anruf initiieren oder ein mit ihr gekoppeltes Mobiltelefon zu Initiierung des Anrufs ansteuern.

Das erfindungsgemäße Kraftfahrzeug kann eine Topografieinformationen bezüglich der Umgebung des Kraftfahrzeug bereitstellende Geodateneinheit und/oder Kamera aufweisen, wobei die Steuereinrichtung dazu ausgebildet sein kann, aus den Topografieinformationen und der Ortsinformation eine eine Sichtbarkeit der Person für wenigstens einen Insassen des Kraftfahrzeugs beschreibende Sichtbarkeitsinformation zu ermitteln und ausschließlich bei Vorliegen einer die Sicherbarkeit bejahenden Sichtbarkeitsinformation das jeweilige der Untergruppe zugehörige Leuchtsegment gemäß der Konfiguration anzusteuern. Die Topografieinformationen beschreiben insbesondere Höheninformationen von Gebäuden oder anderen Objekten, die die Sichtbarkeit der Person behindern können, und können aus der Geodateneinheit, die insbesondere auch Teil der Navigationseinrichtung sein kann, abrufbar sein. Alternativ oder zusätzlich kann eine Kamera die Umgebung des Kraftfahrzeugs erfassen und aus den erfassten Umfelddaten ermitteln, ob die Position, an der sich die zu visualisierende Person befindet, durch Objekte verdeckt ist. Dem Fahrer werden so ausschließlich Person visualisiert, die er dann auch tatsächlich sehen kann. Bei Vorliegen einer die Sichtbarkeit verneinenden Sichtbarkeitsinformation kann vorgesehen sein, dass die Steuereinrichtung die Leuchtsegmente der Untergruppe zur Realisierung einer Ambiente-Beleuchtung gemeinsam mit den übrigen Leuchtsegmenten des wenigstens einen Leuchtmittels ansteuert.

Die Steuereinrichtung kann auch dazu ausgebildet sein, für mehrere Insassen des Kraftfahrzeugs jeweils eine zu visualisierenden Position einer Person auszuwählen und für die ausgewählten Positionen der Personen jeweils die Richtungsinformation zu ermitteln, die Untergruppe auszuwählen und die ihr zugehörigen Leuchtsegmente anzusteuern. Die zur Visualisierung genutzte Leuchtfarbe kann in Abhängigkeit des Insassen bestimmt werden, für den die Visualisierung erfolgt. Es können mithin gleichzeitig mehrere zu visualisierende Positionen von Personen insassenspezifisch ausgewählt werden.

Bei dem erfindungsgemäßen Kraftfahrzeug kann zudem vorgesehen sein, dass das Bauteil ein Armaturenbrett und/oder eine Tür und/oder eine Karosseriesäule und/oder eine Mittelkonsole des Kraftfahrzeugs ist. Vorzugsweise können mehrere linienförmige Leuchtmittel genutzt werden, die an jeweils einem der Bauteile des Kraftfahrzeugs angeordnet sind. Beispielsweise können sich wenigstens ein Leuchtmittel entlang dem Armaturenbrett und jeweils eines der Leuchtmittel entlang der Türen des Kraftfahrzeugs erstrecken. Leuchtmittel können ausschließlich an den Vordertüren oder an den Vorder- und Hintertüren des Kraftfahrzeugs vorgesehen sein. Es kann eine zumindest abschnittsweise umlaufende Leuchtmittellinie realisiert werden, die einerseits eine Ambiente-Beleuchtung des Kraftfahrzeugs und andererseits die Visualisierung von Positionen von Personen ermöglicht.

Die horizontale Ausdehnung der Leuchtsegmente kann bei dem erfindungsgemäßen Kraftfahrzeug jeweils zwischen 2 mm und 100 mm sein. Die horizontale Ausdehnung kann insbesondere wenigstens 5 mm oder wenigstens 10 mm und/oder maximal 50 mm oder 30 mm sein. Die Breite des linienförmigen Leuchtmittel in vertikaler Richtung kann kleiner als 2 mm oder kleiner als 1 mm sein, vorzugsweise kann die Breite 0,8 mm sein. Das Leuchtmittel kann einen gemeinsamen Diffusor für alle oder mehrere Diffusoren für die einzelnen Leuchtsegmente umfassen und/oder es kann derart im Kraftfahrzeug angeordnet sein, dass eine weitere Kraftfahrzeugkomponente zur indirekten Beleuchtung des Fahrzeuginnenraums angestrahlt wird.

Weitere Vorteile und Einzelheiten Erfindung ergeben sich aus den folgenden Ausführungsbeispielen sowie anhand der Zeichnungen. Diese sind schematische Darstellungen und zeigen:
- Fig. 1: eine perspektivische Ansicht des Innenraums eines Ausführungsbeispiels eines erfindungsgemäßen Kraftfahrzeugs;
- Fig. 2: eine Prinzipdarstellung des in Fig. 1 gezeigten Kraftfahrzeugs mit den zur Steuerung von Leuchtmitteln relevanten Komponenten;
- Fig. 3: eine Detailansicht eines Leuchtmittels des in Fig. 1 gezeigten Kraftfahrzeugs; und
- Fig. 4: das in Fig. 1 gezeigten Kraftfahrzeug in einer exemplarischen Fahrsituation.

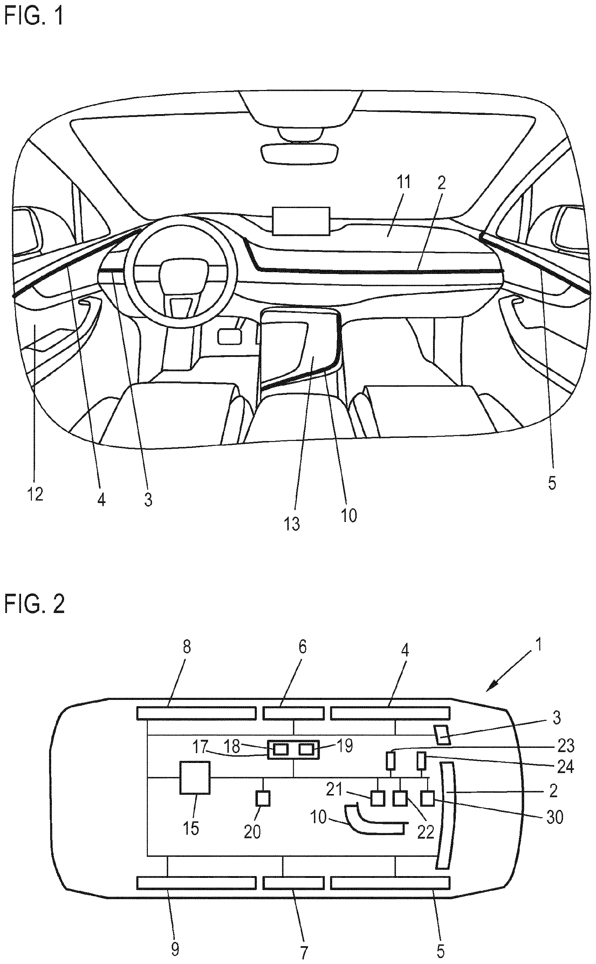

Fig. 1 und 2 zeigen unterschiedliche Ansichten eines Kraftfahrzeugs 1, wobei Fig. 1 schematisch eine perspektivische Darstellung des Innenraums des Kraftfahrzeugs 1 zeigt und Fig. 2 die für die folgende Erläuterung relevanten Komponenten und ihre Kommunikation darstellt. Das Kraftfahrzeug 1 weist mehrere linienförmige Leuchtmittel 2 - 10 auf, die zur direkten Beleuchtung des Fahrzeuginnenraums des Kraftfahrzeugs 1 dienen. In einem alternativen Ausführungsbeispiel wäre es möglich, ergänzend oder alternativ zu den Leuchtmitteln 2 - 10 zur direkten Beleuchtung zusätzliche oder alternative linienförmige Leuchtmittel vorzusehen, die den Fahrzeuginnenraum indirekt beleuchten, indem sie weitere Kraftfahrzeugkomponenten, beispielsweise einen Stoffbezug einer Tür, anstrahlen. Die folgenden Ausführungen bezüglich der linienförmigen Leuchtmittel 2 - 10 zur direkten Beleuchtung lassen sich auch auf solche indirekt beleuchtenden Leuchtmittel übertragen.

Die Leuchtmittel 2 - 10 erstrecken sich jeweils zumindest abschnittsweise horizontal entlang verschiedener Bauteile des Kraftfahrzeugs 1. Die Leuchtmittel 2 und 3 erstrecken sich entlang des Armaturenbretts 11 und die Leuchtmittel 4 und 5 jeweils entlang einer Kontur der vorderen Türen 12 des Kraftfahrzeugs 1. Die Leuchtmittel 6 und 7 erstrecken sich horizontal in Verlängerung der Leuchtmittel 4 und 5 entlang der nicht gezeigten B-Säulen des Kraftfahrzeugs 1 und die Leuchtmittel 8, 9 setzen diese durch die Leuchtmittel 4 und 6 bzw. 5 und 7 gebildete Linie entlang der nicht gezeigten Hintertüren des Kraftfahrzeugs 1 fort. Die Leuchtmittel 2 - 9 bilden somit eine abgesehen von einigen Unterbrechungen im Wesentlichen den seitlichen und vorderen Umfang des Kraftfahrzeugs 1 umlaufende Leuchtlinie, um den Innenraum des Kraftfahrzeugs 1 zu beleuchten. Um die Konturen des Kraftfahrzeugs 1 weiter hervorzuheben, ist zusätzlich das linienförmige Leuchtmittel 10 vorgesehen, das sich entlang der Kontur der Mittelkonsole 13 des Kraftfahrzeugs 1 erstreckt.

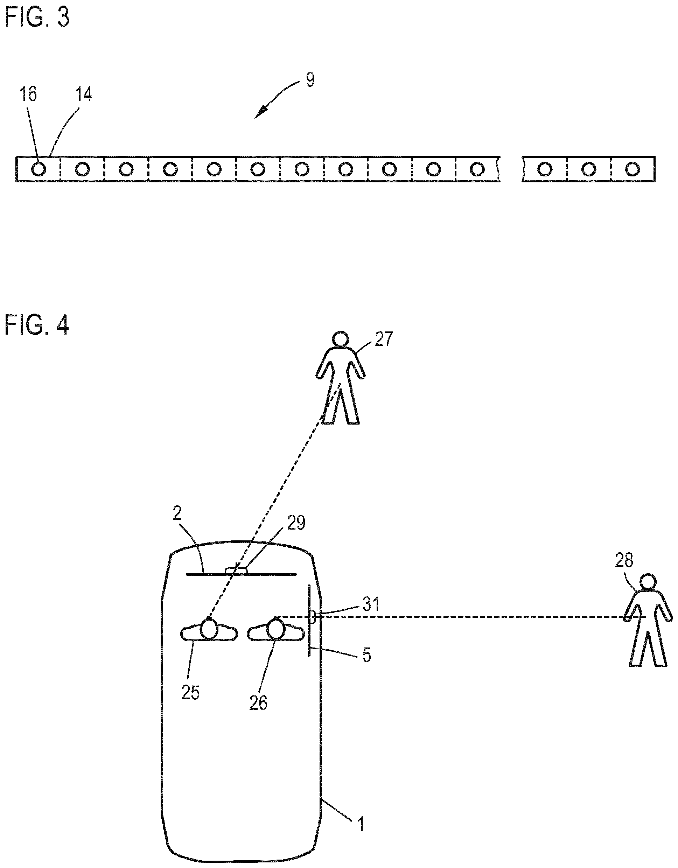

Eine Detaildarstellung der Leuchtmittel 2 - 10 ist am Beispiel des Leuchtmittels 9 in Fig. 3 gezeigt. Das Leuchtmittel 9 weist mehrere Leuchtsegmente 14 auf, die jeweils ein fest vorgegebenes Abstrahlprofil aufweisen und separat durch eine Steuereinrichtung 15 des Kraftfahrzeugs zur Vorgabe einer Leuchthelligkeit und/oder einer Leuchtfarbe der Leuchtsegmente 14 ansteuerbar sind. Die einzelnen Leuchtsegmente weisen jeweils ein Leuchtelement 16 auf, das beispielsweise eine RGB-LED sein kann, dessen Leuchthelligkeit und/oder Leuchtfarbe durch die Steuereinrichtung 15 steuerbar ist. Zwischen den einzelnen Leuchtelementen 16 und dem Fahrzeuginnenraum ist ein nicht gezeigter Diffusor angeordnet, der das Licht der einzelnen Leuchtelemente 16 derart streut, dass bei einem Betrieb benachbarter Leuchtsegmente 14 in Horizontalrichtung eine im Wesentlichen homogene Leuchthelligkeit und Leuchtfarbe erreicht wird.

Wieder mit Bezug auf Fig. 2 weist das Kraftfahrzeug 1 eine Navigationseinrichtung 17 mit einer integrierten Positionserfassungseinheit 18 auf. Mittels der Positionserfassungseinheit 18 ist eine eine Position und eine Ausrichtung des Kraftfahrzeugs 1 in einem geodätischen Koordinatensystem beschreibende Egoinformation ermittelbar. Die Navigationseinrichtung 17 umfasst ferner eine Geodateneinheit 19, in welcher Topografieinformationen bezüglich der Umgebung des Kraftfahrzeugs 1 abgelegt sind.

Das Kraftfahrzeug 1 weist zudem eine Kommunikationseinrichtung 20 auf, mittels welcher eine Internetverbindung aufbaubar ist. Die Internetverbindung wird unmittelbar durch die Kommunikationseinrichtung 20 hergestellt. In einem alternativen Ausführungsbeispiel koppelt sich die Kommunikationseinrichtung 20 mit einem nicht gezeigten Mobiltelefon eines Insassen des Kraftfahrzeugs über Bluetooth, wobei das Mobiltelefon die Internetverbindung aufbaut. Die Kommunikationseinrichtung 20 stellt der Steuereinrichtung 15 aus einem internetbasierten sozialen Netzwerk abgerufene Information über eine darin verzeichnete Person bereit. Diese umfassen insbesondere eine Ortsinformation, die die Position der Person beschreibt, und eine Personeninformation, die Eigenschaften der Person beschreibt. Daneben leitet die Steuereinrichtung 15 aus den abgerufenen Informationen Hinweisinformationen ab, die den Namen der Person und eine Kontaktmöglichkeit über ihr Mobiltelefon umfassen.

Außerdem umfasst das Kraftfahrzeug 1 eine Kamera 21, die seinen Innenraum erfasst, und weitere Kameras, welche die Umgebung des Kraftfahrzeugs 1 erfassen, von denen beispielhaft nur die Kamera 22 dargestellt ist. Bilddaten von diesen weiteren Kameras können als Topografieinformationen, alternativ oder ergänzend zu jenen der Geodateneinheit 19, verwendet werden. Daneben sind eine zur Anzeige von Texten und Grafiken ausgebildete optische Ausgabeeinrichtung 23 und eine akustische Ausgabeeinrichtung 24 vorgesehen.

Fig. 4 zeigt eine exemplarische Fahrsituation des Kraftfahrzeugs 1, in dem sich ein erster Insasse 25 und ein zweiter Insasse 26 befinden. In der Umgebung des Kraftfahrzeugs befinden sich zwei in einem sozialen Netzwerk, dessen Nutzer der erste Insasse 25 und der zweite Insasse 26 sind, verzeichnete Personen 27, 28. Anhand dieser Fahrsituation wird im Folgenden die Funktion der Steuereinrichtung 15 hinsichtlich der Visualisierung der Person 27 für den ersten Insassen 25 und der Person 28 für den zweiten Insassen 26 näher erläutert:

Zunächst stellt die Kommunikationseinrichtung 20 der Steuereinrichtung 15 eine Ortsinformation in Form von geodätischen Koordinaten der Position, an dem sich die Person 27 befindet, bereit. Von der Positionserfassungseinheit 18 wird eine die Position und die Ausrichtung des Kraftfahrzeugs 1 beschreibende Egoinformation bereitgestellt. Aus der Ortsinformation und der Egoinformation ermittelt die Steuereinrichtung 15 eine eine Richtung der Position der Person 27 bezüglich des Kraftfahrzeugs 1 beschreibende Richtungsinformation.

Anschließend wählt die Steuereinrichtung 15 eine Untergruppe 29 der Leuchtsegmente 14 des Leuchtmittels 2 derart aus, dass sie jene Leuchtsegmente umfasst, welche sich aus Sicht des ersten Insassen 25 des Kraftfahrzeugs 1 auf einer Linie der Position der Person 27 befinden. Dazu erhält die Steuereinrichtung 15 von der Kamera 21 Informationen über die Augenposition des Insassen 25 und ermittelt daraus einen Schnittpunkt des linienförmigen Leuchtmittels 2 mit der die Augenposition und die Position der Person 27 verbindenden Linie. Zusätzlich ermittelt die Steuereinrichtung 15 aus der Egoinformation und der Ortsinformation die Entfernung der Person 27 zum Kraftfahrzeug 1 und bestimmt die Anzahl der Leuchtelemente 14 der Untergruppe 29 in Abhängigkeit der Entfernung, wobei unterschiedlichen Entfernungsintervallen jeweils eine unterschiedliche Anzahl von Leuchtelementen 14 zugeordnet ist. Bei einer geringen Entfernung werden eine größere Anzahl an Leuchtelementen 14 ausgewählt als bei einer größeren Entfernung.

Die Steuereinrichtung 15 ermittelt im Anschluss aus den Topografieinformationen eine eine Sichtbarkeit der Person 27 für den ersten Insassen 25 beschreibende Sichtbarkeitsinformation. Dazu beschreiben die Topografieinformationen insbesondere ein Höhenprofil der Umgebung des Kraftfahrzeugs 1 zwischen ihm und der Person 27. Befindet sich beispielsweise ein die Person 27 verdeckendes Gebäude (nicht gezeigt) zwischen dem Kraftfahrzeug 1 und der Person 27, so wird eine die Sichtbarkeit verneinende Sichtbarkeitsinformation ermittelt. Das Leuchtmittel 2 wird bei einer solchen Sichtbarkeitsinformation als Ambiente-Beleuchtung weiterbetrieben und die Person 27 nicht visualisiert.

Liegt hingegen eine die Sichtbarkeit bejahende Sichtbarkeitsinformation vor, so steuert die Steuereinrichtung 15 die Leuchtsegmenten 14 der Untergruppe 29 gemäß einer ihre Leuchthelligkeit und Leuchtfarbe vorgebenden, die Position der Person 27 visualisieren Konfiguration an. Diese Konfiguration ermittelt die Steuereinrichtung hinsichtlich der Leuchtfarbe in Abhängigkeit einer über die Kommunikationseinrichtung 20 abgerufenen Eigenschaftsinformation, welche die Zugehörigkeit der Person 27 zu einer virtuellen Gruppe innerhalb des sozialen Netzwerks beschreibt. Ist die Person 27 beispielsweise als enger Freund klassifiziert, kann eine andere Leuchtfarbe gewählt werden, als wenn es sich bei der Person 27 um ein Geschäftspartner handelt. Gleichzeitig steuert die Steuereinrichtung 15 die Ausgabeeinrichtungen 23, 24 zur Ausgabe der Hinweisinformationen an. Wie zuvor erwähnt umfasst die Hinweisinformation eine drahtlose Kontaktmöglichkeit zu Person 27. Der erste Insasse 25 kann nun über eine manuelle oder sprachgesteuerte Eingabeeinrichtung 30 des Kraftfahrzeugs 1 eine Bedieneingabe tätigen, bei deren Vorliegen die Steuereinrichtung 15 die Kommunikationseinrichtung 20 zur Herstellung einer Kommunikationsverbindung gemäß der beschriebenen drahtlosen Kontaktmöglichkeit ansteuert. Die Kontaktmöglichkeit kann beispielsweise eine Mobilfunkrufnummer der Person 27 sein, die von der Kommunikationseinrichtung 20 oder einem mit ihr gekoppelten Mobiltelefon angewählt wird.

Für den zweiten Insassen 26 steuert die Steuereinrichtung 15 eine Untergruppe 31 von Leuchtsegmenten 14 in analoger Weise zur Visualisierung der Position, an der sich die Person 28 befindet, an. Ersichtlich ist die Person 28 weiter von dem Kraftfahrzeug 1 entfernt als die Person 27, so dass für sie die Untergruppe 31 mit einer geringeren Anzahl von Leuchtmitteln 14 als die Untergruppe 29 ausgewählt wird. An die Konfiguration der Leuchtsegmente 14 der Untergruppe 31 ist hinsichtlich ihrer Leuchtfarbe derart gewählt, dass die Person 28 bezüglich ihrer Zugehörigkeit zu einer virtuellen Gruppe unterscheidbar ist. In einem alternativen Ausführungsbeispiel ist es denkbar, dass die Konfiguration der Leuchtfarbe der Leuchtsegmente 14 der Untergruppen 29, 31 in Abhängigkeit der Zugehörigkeit der Person 27, 28 zu einem jeweiligen Nutzerprofil des ersten Insassen 25 und des zweiten Insassen 26 vorgegeben wird, also in Abhängigkeit davon, ob die Visualisierung jeweils für den ersten Insassen 25 oder den zweiten Insassen 26 erfolgt.

## Patentansprüche

1. Kraftfahrzeug, umfassend wenigstens ein linienförmiges Leuchtmittel (2-10) zur direkten und/oder indirekten Beleuchtung eines Fahrzeuginnenraums, das sich zumindest abschnittsweise horizontal entlang wenigstens eines Bauteils des Kraftfahrzeugs (1) erstreckt, und eine Positionserfassungseinheit (18) zur Erfassung einer eine Position und eine Ausrichtung des Kraftfahrzeugs (1) beschreibenden Egoinformation, wobei das Leuchtmittel (2-10) horizontal in mehrere Leuchtsegmente (14) unterteilt ist, die jeweils ein fest vorgegebenes Abstrahlprofil aufweisen, wobei das Kraftfahrzeug (1) eine Steuereinrichtung (15) aufweist, die dazu ausgebildet ist,
- aus einer über eine Kommunikationseinrichtung (20) des Kraftfahrzeugs (1) von einem kraftfahrzeugexternen Internetserver abgerufenen Ortsinformation, die eine Position einer Person (27, 28) beschreibt, und der Egoinformation eine eine Richtung, in der sich die Person (27, 28) bezüglich des Kraftfahrzeugs (1) befindet, beschreibende Richtungsinformation zu ermitteln,
- in Abhängigkeit der Richtungsinformation eine wenigstens ein anzusteuerndes Leuchtsegment (14) umfassende Untergruppe der Leuchtsegmente (14) auszuwählen, und
- das jeweilige der Untergruppe (29, 31) zugehörige Leuchtsegment (14) gemäß einer seine Leuchthelligkeit und/oder seine Leuchtfarbe vorgebenden, die Position der Person (27, 28) visualisierenden Konfiguration anzusteuern.

2. Kraftfahrzeug nach Anspruch 1,
**dadurch gekennzeichnet,**
**dass** die Steuereinrichtung (15) ferner dazu ausgebildet ist, die Untergruppe (29, 31) derart auszuwählen, dass sie ein Leuchtsegment (14) umfasst, welches sich aus der Sicht wenigstens eines Insassen (25, 26) des Kraftfahrzeugs (1) auf einer Linie mit der Position der Person (27, 28) befindet.

3. Kraftfahrzeug nach Anspruch 1 oder 2,
**dadurch gekennzeichnet,**
**dass** die Steuereinrichtung (15) ferner zum Auswählen der Untergruppe (29, 31) und/oder zum Anpassen der Konfiguration in Abhängigkeit der Ortsinformation und/oder einer eine Eigenschaft der Person (27, 28) beschreibenden Personeninformation ausgebildet ist.

4. Kraftfahrzeug nach einem der vorhergehenden Ansprüche,
**dadurch gekennzeichnet,**
**dass** eine akustische und/oder eine zur Anzeige von Texten und/oder Grafiken ausgebildete optische Ausgabeeinrichtung (23, 24) vorgesehen ist, die mittels der Steuereinrichtung (15) zur Ausgabe einer auf die visualisierte Person (27, 28) hinweisenden Hinweisinformation ansteuerbar ist.

5. Kraftfahrzeug nach Anspruch 4,
**dadurch gekennzeichnet,**
**dass** die Hinweisinformation zusätzlich eine durch die Kommunikationseinrichtung (20) bereitgestellte drahtlose Kontaktmöglichkeit zur Person (27, 28) beschreibt, wobei die Steuereinrichtung (15) ferner dazu ausgebildet ist, bei Vorliegen einer eine Herstellung einer Kommunikationsverbindung über die Kontaktmöglichkeit anfordernden Bedieneingabe des Insassen die Kommunikationseinrichtung (20) zur Herstellung der Kommunikationsverbindung anzusteuern.

6. Kraftfahrzeug nach einem der vorhergehenden Ansprüche,
**dadurch gekennzeichnet,**
**dass** es eine Topografieinformationen bezüglich der Umgebung des Kraftfahrzeug (1) bereitstellende Geodateneinheit (19) und/oder Kamera (22) aufweist, wobei die Steuereinrichtung (15) ferner dazu ausgebildet ist, aus den Topografieinformationen und der Ortsinformation eine eine Sichtbarkeit der Person (27, 28) für wenigstens einen Insassen (25, 26) des Kraftfahrzeugs (1) beschreibende Sichtbarkeitsinformation zu ermitteln und ausschließlich bei Vorliegen einer die Sichtbarkeit bejahenden Sichtbarkeitsinformation das jeweilige der Untergruppe (29, 31) zugehörige Leuchtsegment (14) gemäß der Konfiguration anzusteuern.

7. Kraftfahrzeug nach einem der vorhergehenden Ansprüche,
**dadurch gekennzeichnet,**
**dass** die Steuereinrichtung (15) dazu ausgebildet ist, für mehrere Insassen (25, 26) des Kraftfahrzeugs (1) jeweils eine zu visualisierende Position einer Person (27, 28) auszuwählen und für die ausgewählten Positionen (27, 28) der Personen jeweils die Richtungsinformation zu ermitteln, die Untergruppe (29, 31) auszuwählen und die ihr zugehörigen Leuchtsegmente (14) anzusteuern.

8. Kraftfahrzeug nach einem der vorangehenden Ansprüche,
**dadurch gekennzeichnet,**
**dass** das Bauteil ein Armaturenbrett (11) und/oder eine Tür (12) und/oder eine Karosseriesäule und/oder eine Mittelkonsole (13) des Kraftfahrzeugs (1) ist.

9. Kraftfahrzeug nach einem der vorangehenden Ansprüche,
**dadurch gekennzeichnet,**
**dass** die horizontale Ausdehnung der Leuchtsegmente (14) jeweils zwischen 2 mm und 100 mm ist.

## Claims

1. Motor vehicle including at least one linear light source (2-10) for the direct and/or indirect illumination of a vehicle interior, which extends at least portionally in a horizontal manner along at least one component of the motor vehicle (1), and a position-detecting-unit (18) for detecting an ego information describing a position and an orientation of the motor vehicle (1), wherein the light source (2-10) is divided horizontally into several light segments (14) which have respectively a permanently predefined radiating profile, wherein the motor vehicle (1) has a control device (15) which is configured
- to determine from a location information retrieved via a communication apparatus (20) of the motor vehicle (1) from a vehicle-external internet server, which location information describes a position of a person (27, 28), and from the ego information, a direction information describing a direction in which the person (27, 28) is located with respect to the motor vehicle (1),
- depending on the direction information to select a subgroup of the light segments (14) including at least one light segment (14) to be controlled, and
- to control the respective light segment (14) belonging to the subgroup (29, 31) according to a configuration predetermining its light intensity and/or its light colour and visualising the position of the person (27, 28).

2. Motor vehicle according to claim 1,
**characterised in**
**that** the control device (15) is furthermore configured to select the subgroup (29, 31) such that it includes a light segment (14) which is located, in the sight of at least one occupant (25, 26) of the motor vehicle (1) on a line with the position of the person (27, 28).

3. Motor vehicle according to claim 1 or 2,
**characterised in**
**that** the control device (15) is furthermore configured for the selection of the subgroup (29, 31) and/or for adapting the configuration depending on the local information and/or a person information describing a property of the person (27, 28).

4. Motor vehicle according to any of the preceding claims,
**characterised in**
**that** an acoustic and/or an optical output device (23, 24) configured for the display of texts and/or graphics is provided, which by means of the control device (15) can be controlled for the output of an indicating information indicating the visualised person (27, 28).

5. Motor vehicle according to claim 4,
**characterised in**
**that** the indicating information describes in addition a wireless contact possibility, provided by the communication apparatus (20), to the person (27, 28), wherein the control device (15) is furthermore configured, in the presence of an operating input requesting and establishing a communication connection via the contact possibility, to control the communication apparatus (20) to establish the communication connection.

6. Motor vehicle according to any of the preceding claims,
**characterised in**
**that** it has a geodata unit (19) and/or camera (22) providing topography information regarding the environment of the motor vehicle (1), wherein the control device (15) is furthermore configured to determine from the topography information and the location information a visibility information describing a visibility of the person (27, 28) for at least one occupant (25, 26) of the motor vehicle (1) and, exclusively in the case of the presence of a visibility information confirming the visibility, to control the light segment (14) belonging to the subgroup (29, 31) according to the configuration.

7. Motor vehicle according to any of the preceding claims,
**characterised in**
**that** the control device (15) is configured to select for several occupants (25, 26) of the motor vehicle (1) in each case one position, to be visualised, of a person (27, 28) and for the selected positions (27, 28) of the persons to determine in each case the direction information, to select the subgroup (29, 31) and to control the light segments (14) belonging thereto.

8. Motor vehicle according to any of the preceding claims,
**characterised in**
**that** the component is a dashboard (11) and/or a door (12) and/or a vehicle body column and/or a centre console (13) of the motor vehicle (1).

9. Motor vehicle according to any of the preceding claims,
**characterised in**
**that** the horizontal extension of the light segments (14) is respectively between 2 mm and 100 mm.

## Revendications

1. Véhicule automobile comprenant au moins un moyen d'éclairage (2-10) linéaire servant à éclairer directement et/ou indirectement un habitable de véhicule, qui s'étend au moins par endroits de manière horizontale le long d'au moins un composant du véhicule automobile (1), et une unité de détection de position (18) servant à détecter une géo-information décrivant une position et une orientation du véhicule automobile (1),
dans lequel le moyen d'éclairage (2-10) est divisé de manière horizontale en plusieurs segments d'éclairage (14), qui présentent respectivement un profil de rayonnement fixement prédéfini, dans lequel le véhicule automobile (1) présente un dispositif de commande (15), qui est réalisé
- pour déterminer, à partir d'une information d'emplacement consultée par l'intermédiaire d'un dispositif de communication (20) du véhicule automobile (1) par un serveur Internet externe au véhicule automobile, qui décrit une position d'une personne (27, 28), et de la géo-information, une information de direction décrivant une direction, dans laquelle se trouve la personne (27, 28) par rapport au véhicule automobile (1),
- pour sélectionner en fonction de l'information de direction un sous-groupe, comprenant au moins un segment d'éclairage (14) à piloter, des segments d'éclairage (14), et
- pour piloter le segment d'éclairage (14) respectif appartenant au sous-groupe (29, 31) selon une configuration prédéfinissant sa luminosité et/ou sa couleur, visualisant la position de la personne (27, 28).

2. Véhicule automobile selon la revendication 1,
**caractérisé en ce**
**que** le dispositif de commande (15) est réalisé en outre pour sélectionner le sous-groupe (29, 31) de telle manière qu'il comprenne un segment d'éclairage (14), lequel se trouve, d'après le point de vue d'au moins un passager (25, 26) du véhicule automobile (1), sur une ligne avec la position de la personne (27, 28).

3. Véhicule automobile selon la revendication 1 ou 2,
**caractérisé en ce**
**que** le dispositif de commande (15) est réalisé en outre pour sélectionner le sous-groupe (29, 31) et/ou pour adapter la configuration en fonction de l'information d'emplacement et/ou d'une information de personne décrivant une caractéristique de la personne (27, 28).

4. Véhicule automobile selon l'une quelconque des revendications précédentes,
**caractérisé en ce**
**qu'**un dispositif d'émission (23, 24) acoustique et/ou optique réalisé pour afficher des textes et/ou des graphiques est prévu, qui peut être piloté au moyen du dispositif de commande (15) pour émettre une information indicative indiquant la personne (27, 28) visualisée.

5. Véhicule automobile selon la revendication 4,
**caractérisé en ce**
**que** l'information indicative décrit en supplément une possibilité de contact sans fil avec la personne (27, 28) offerte par le dispositif de communication (20), dans lequel le dispositif de commande (15) est réalisé en outre pour piloter, en présence d'une entrée d'utilisation, requérant l'établissement d'une liaison de communication par l'intermédiaire de la possibilité de contact, du passager, le dispositif de communication (20) pour établir la liaison de communication.

6. Véhicule automobile selon l'une quelconque des revendications précédentes,
**caractérisé en ce**
**qu'**il présente une unité de données géographiques (19) et/ou une caméra (22) offrant des informations topographiques concernant l'environnement du véhicule automobile (1), dans lequel le dispositif de commande (15) est en outre réalisé pour déterminer à partir des informations topographiques et de l'information d'emplacement une information de visibilité décrivant une visibilité de la personne (27, 28) pour au moins un passager (25, 26) du véhicule automobile (1) et pour piloter selon la configuration, exclusivement en présence d'une information de visibilité approuvant la visibilité, le segment d'éclairage (14) respectif appartenant au sous-groupe (29, 31).

7. Véhicule automobile selon l'une quelconque des revendications précédentes,
**caractérisé en ce**
**que** le dispositif de commande (15) est réalisé pour sélectionner pour plusieurs passagers (25, 26) du véhicule automobile (1) respectivement une position à visualiser d'une personne (27, 28) et pour déterminer pour les positions sélectionnées des personnes (27, 28) respectivement l'information de direction, pour sélectionner le sous-groupe (29, 31) et piloter les segments d'éclairage (14) lui appartenant.

8. Véhicule automobile selon l'une quelconque des revendications précédentes,
**caractérisé en ce**
**que** le composant est un tableau de bord (11) et/ou une portière (12) et/ou une colonne de carrosserie et/ou une console centrale (13) du véhicule automobile (1).

9. Véhicule automobile selon l'une quelconque des revendications précédentes,
**caractérisé en ce**
**que** l'extension horizontale des segments d'éclairage (14) se situe respectivement entre 2 mm et 100 mm.
